Europäisches Patentamt

European Patent Office

Office européen des brevets

(11) Veröffentlichungsnummer: **0 350 589**
**A1**

(12) **EUROPÄISCHE PATENTANMELDUNG**

(21) Anmeldenummer: **89108567.2**

(22) Anmeldetag: **12.05.89**

(51) Int. Cl.⁴: **G02B 6/34 , G02B 6/10 , G01M 11/02 , G01N 21/41 , G01B 11/26**

Die Bezeichnung der Erfindung wurde geändert (Richtlinien für die Prüfung im EPA, A-III, 7.3).

(30) Priorität: **17.05.88 CH 1845/88**

(43) Veröffentlichungstag der Anmeldung:
**17.01.90 Patentblatt 90/03**

(84) Benannte Vertragsstaaten:
**CH DE FR GB IT LI NL SE**

(71) Anmelder: **Oerlikon-Bührle Holding AG
Hofwiesenstrasse 135
CH-8057 Zürich(CH)**

(72) Erfinder: **Tiefenthaler, Kurt, Dr.
Bächlerstrasse 7
CH-8046 Zürich(CH)**

(74) Vertreter: **Hunziker, Kurt et al
c/o Werkzeugmaschinenfabrik
Oerlikon-Bührle AG Birchstrasse 155
CH-8050 Zürich(CH)**

(54) **Bestimmung des Autokollimationswinkels eines Gitterkopplers.**

(57) Die Erfindung beschreibt ein Verfahren zur Bestimmung des Autokollimationswinkels eines aus einem dünnen wellenleitenden Film (F) und einem Beugungsgitter (G) bestehenden Gitterkopplers. Erfindungsgemäss wird ein Laserstrahl (L) näherungsweise senkrecht auf das auf einem Drehtisch (T) montierten Beugungsgitter (G) gerichtet. Der Drehtisch (T) wird über einen Hebelarm (H) mittels einer von einem Schrittmotor (SM) angetriebenen Mikrometerschraube (MS) um einen kleinen Winkel in positiver und negativer Drehrichtung bewegt, bis die Einkopplungsbedingung in positiver und negativer x-Richtung erfüllt ist. Der Mittelwert der beiden Resonanzeinfallswinkel bestimmt den Autokollimationswinkel.

FIG. 2

EP 0 350 589 A1

# Verfahren zur Bestimmung des Autokollimationswinkels eines Gitterkopplers

Die vorliegende Erfindung beschreibt ein Verfahren gemäss Oberbegriff des Patentanspruches 1.

Der Gitterkoppler, der Prismenkoppler und der Stirnflächenkoppler sind bekannte Techniken, um in einem Wellenleiter einen geführten Mode anzuregen. Mit dem Gitterkoppler bzw. dem Prismenkoppler ist die Bestimmung der effektiven Brechzahl eines geführten Modes möglich, indem der entsprechende Einkopplungswinkel bestimmt wird. Der Einkopplungswinkel ist die Differenz von Resonanzeinfallswinkel, bei dem Modenanregung beobachtet wird, und Autokollimationswinkel, bei dem der Laserstrahl in sich zurückreflektiert wird. Die Bestimmung des Einfallswinkels ist sehr genau möglich, da die Modenanregung ein Resonanzphänomen darstellt. Bei einem bisher bekannten Verfahren wird der Autokollimationswinkel in der Weise bestimmt, dass ein Laserstrahl senkrecht auf die Oberfläche des zu untersuchenden Wellenleiters gerichtet und der Drehtisch derart ausgerichtet wird, dass der Laserstrahl möglichst genau in sich selber zurückreflektiert wird. Dieses Verfahren ist jedoch mit verhältnismässig grossen Toleranzen verbunden. Die genaue Bestimmung des Autokollimationswinkels bereitet jedoch Schwierigkeiten und verlangt eine teure Autokollimationsoptik.

Die Erfindung, wie sie im Patentanspruch 1 gekennzeichnet ist, löst die Aufgabe, ein Verfahren zu schaffen, welches mit möglichst einfachen Mitteln eine möglichst präzise Bestimmung des Autokollimationswinkels eines Gitterkopplers erlaubt.

Bei bekanntem Autokollimationswinkel kann dann die effektive Brechzahl eines Modes in der Gitterregion quantitativ bestimmt werden.

Ferner kann die effektive Brechzahl fortlaufend quantitativ bestimmt werden, auch wenn der Wellenleiter zeitweise von der Drehtischhalterung entfernt wird.

Im folgenden wird die Erfindung anhand einer Zeichnung beispielsweise näher erläutert. Es zeigen:

Fig.1 einen Gittereinkoppler, wobei - je nach Einfallswinkel - der Mode vorwärts (d.h. in ($+$x)-Richtung) oder rückwärts (d.h. in umgekehrter Richtung) läuft;

Fig. 2 wie ein Hebelarm und eine Mikrometerschraube zur hochauflösenden Drehung eines auf einem Drehtisch montierten Gitterkopplers eingesetzt werden;

Fig. 3 die Intensitätsverteilung eines angeregten Modes, wenn der Gitterkoppler in den Resonanz-Einfallswinkel gedreht wird.

Der Gitterkoppler besteht aus einem dünnen wellenleitenden Film F auf einem Substrat S und einem Beugungsgitter G. Ein als Lichtstrahl dienender Laserstrahl L, der auf das Gitter G gerichtet ist, wird in ($+$x)-Richtung eingekoppelt, falls die Einkopplungsbedingung

$$N_+ \equiv \ = N = \sin \alpha_+ + l_+ (\lambda/\Lambda)$$

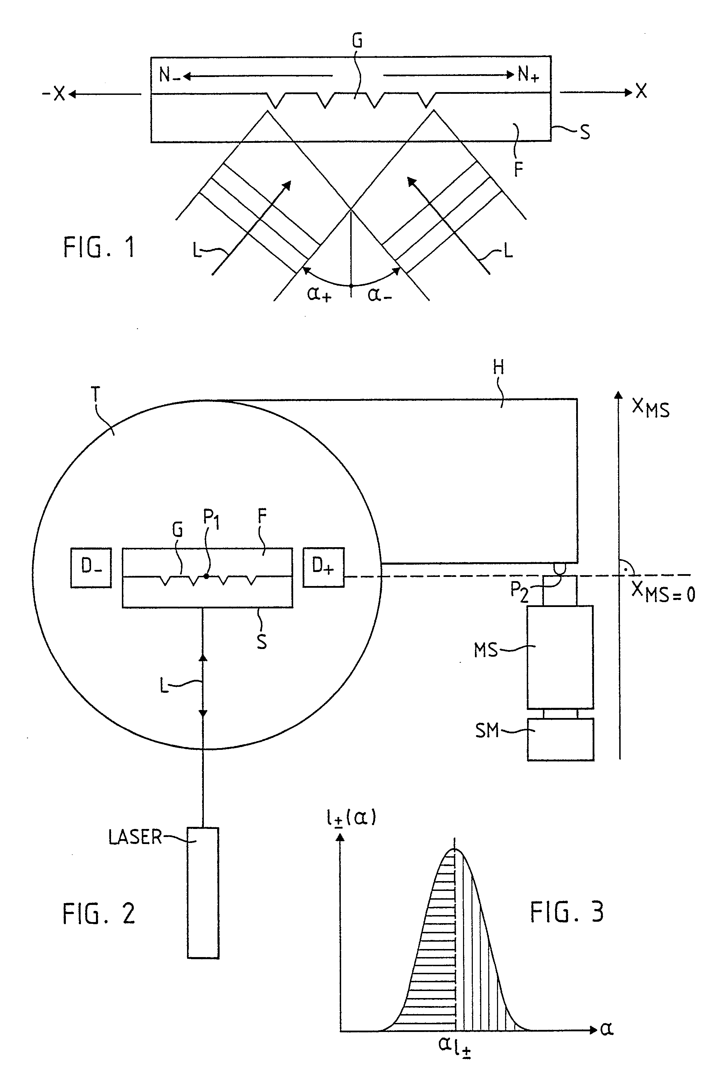

erfüllt ist (siehe Figur 1). Dabei sind: $N$ die effektive Brechzahl des Modes; $\alpha_+$ der Einkopplungswinkel für die Modenanregung in ($+$x)-Richtung; $l_+ = \ + |l|$ ($l$ ist die Beugungsordnung); $\lambda$ die Wellenlänge; $\Lambda$ die Gitterperiode. Es ist jedoch auch möglich, über die Beugungsordnung $l_- = \ - |l|$ einen Mode in (-x)-Richtung anzuregen, falls die Einkopplungsbedingung

$$N_- \equiv -N = \sin \alpha_- + l_- (\lambda/\Lambda)$$

erfüllt ist (siehe Figur 1). Dabei ist $\alpha_-$ der Einkopplungswinkel für die Modenanregung in (-x)-Richtung. Aus Symmetriegründen gilt

$$\alpha_- = -\alpha_+$$

wobei vorausgesetzt wird, dass die Modenanregung über diesel be absolute Beugungsordnung erfolgt, d.h. $|l_+| = |l_-|$ ist.

Für die Einkopplungswinkel gilt

$$\alpha_+ = \alpha_{1+} -\alpha_{AC}, \ \alpha_- = \alpha_{1-} -\alpha_{AC}$$

wobei $\alpha_{1\pm}$ der Resonanzeinfallswinkel für Modenanregung in ($\pm$x)-Richtung via die Beugungsordnung $l \pm$ und $\alpha_{AC}$ der Autokollimationswinkel sind. Aus $\alpha_- = -\alpha_+$ folgt somit, dass der Autokollimationswinkel $\alpha_{AC} = (\alpha_{1+} + \alpha_{1-})/2$ der Mittelwert der beiden Einfallswinkel ist. Da $\alpha_{1+}$ und $\alpha_{1-}$ Resonanzwinkel sind, kann der Autokollimationswinkel somit mit der Genauigkeit eines Resonanzwinkels bestimmt werden. Ist erst einmal der Autokollimationswinkel gefunden, kann über die Einkopplungsbedingung die effektive Brechzahl bestimmt werden.

Der Gitterkoppler ist gemäss Figur 2 auf einem Drehtisch T montiert, der in seiner praktischen Ausführung immer mit einer bestimmten Ungenauigkeit verbunden ist. Um den Einfluss dieser Ungenauigkeit zu minimieren, sollte die Winkeldifferenz $\alpha_+ -\alpha_- = 2\alpha_+$ möglichst klein gehalten werden. Der Winkel $\alpha_+$ sollte deshalb nicht grösser als 15$^\circ$, vorzugsweise nicht grösser als 9$^\circ$ gewählt werden.

Dies kann vornehmlich durch die richtige Wahl der Gitterperiode erreicht werden, die wiederum von der verwendeten Beugungsordnung abhängt. Wird beispielsweise $\alpha_+ = -\alpha_- = 0$ angestrebt, so gilt $N = |l|(\lambda/\Lambda)$.

2

Für diesen Fall muss die Gitterperiode $\Lambda = |I|(\lambda/N)$ gewählt werden.

Werden beispielsweise $SiO_2$ - $TiO_2$ Wellenleiter mit Brechzahl 1.8 und Schichtdicke 120nm verwendet, wie sie von W. Lukosz und K. Tiefenthaler in Optics Letters 8 (1983), 537-539 beschrieben werden, so empfiehlt es sich mit folgenden Gitterperioden zu arbeiten: Für die Einkopplung über die Beugungsordnung $I = 1$ weist der Gitterkoppler vorteilhaft eine Linienzahl von 2400 Linien/mm auf. Es können jedoch auch Gitter mit nur 1200 Linien/mm verwendet werden. In diesem Fall wird dann über die Beugungsordnung $I = 2$ eingekoppelt.

Eine kleine Winkeldifferenz $\alpha_+ -\alpha_- = 2\alpha_+$ bedeutet nahezu senkrechten Lichteinfall für die Modenanregung und hat den Vorteil, dass beide Resonanzeinkopplungskurven, aus denen die exakten Resonanz-Einfallswinkel $\alpha_{1+}$ und $\alpha_{1-}$ bestimmt werden, über einen am Drehtisch angebauten Hebelarm H mittels einer Schrittmotor SM gesteuerten, als Vorschubvorrichtung dienenden Mikrometerschraube MS mit höchster Präzision nacheinander durchfahren und registriert werden können (siehe Fig. 2). Die Position des Messpunktes der Mikrometerschraube MS kann beispielsweise über einen am Schrittmotor SM montierten in Figur 2 nicht eingezeichneten Encoder, vorzugsweise optischer Ausführungsform, bestimmt werden. Da mit einer Hebelarm unterstützten Drehvorrichtung nur ein sehr begrenztes Winkelsegment abgefahren werden kann, muss darauf geachtet werden, dass die beiden Resonanz-Einfallswinkel $\alpha_{1+}$ und $\alpha_{1-}$ in dieses Winkelsegment fallen. Aus Symmetriegründen wird vorteilhaft folgender experimenteller Aufbau gewählt: Der Autokollimationswinkel, d.h. jene Winkelstellung, bei welcher der Laserstrahl L in sich zurückreflektiert wird, soll näherungsweise jener Stellung der Mikrometerschraube MS entsprechen, bei welcher der Hebelarm senkrecht zur Achse der Mikrometerschraube MS steht (siehe Figur 2). Genauer formuliert heisst das, dass die Gerade, definiert durch den Drehpunkt $P_1$ des Drehtisches und den in diesem Ausführungsbeispiel als Messpunkt dienenden Auflagepunkt $P_2$ des Hebelarms an die Mikrometerschraube MS, senkrecht zur Mikrometerschraubenachse stehen soll. Der Punkt $P_2$ bildet dann den Ursprung $X_{MS} = O$ auf der $X_{MS}$-Achse der Mikrometerschraube. Der Punkt $X_{MS} = O$ kann unter Zuhilfenahme eines Gitterkopplers der mindestens die beiden Grundmoden $TE_0$ und $TM_0$ trägt, auf folgende einfache Weise bestimmt werden:

Es wird sowohl für den $TE_0$ Mode als auch für den $TM_0$ Mode ein Autokollimationswinkel ermittelt, d.h. $\alpha_{AC}$ (TE) und $\alpha_{AC}$ (TM). Durch Variation der Position des Ursprungs $X_{MS} = O$ entlang der $X_{MS}$-Achse kann erreicht werden, dass

$$\alpha_{AC} (TE) = \alpha_{AC} (TM)$$

wird. Der so gefundene Koordinatenursprung $X_{MS} = O$ erfüllt dann die Bedingung, dass die Gerade $\overline{P_1P_2}$ senkrecht zur $X_{MS}$-Achse der Mikrometerschraube MS steht.

Obige Justierungsmethode kann allgemein auch dazu benutzt werden, um einen Drehtisch zu eichen, der in einem kleinen Winkelsegment hochauflösend beweglich sein soll. Der Gitterkoppler wird in diesem Fall nur eingesetzt, um diejenige Stellung zu finden, bei welcher der Hebelarm senkrecht zur Achse der Mikrometerschraube MS steht.

Wird der Gitterkoppler als Sensor eingesetzt (vergleiche K. Tiefenthaler und W. Lukosz, JOSA B6 (1989), 209-220), so ist es vorteilhaft, einen experimentellen Aufbau zu wählen, bei dem der Gitterkoppler horizontal, d.h. parallel zur Tischplatte liegt. Eine flüssige Probe kann dann in Form eines Tropfens direkt auf den Gitterkoppler aufgebracht werden, ohne abzurinnen. Aus Platzgründen empfiehlt es sich, Laser und Mikrometerschraube ebenfalls parallel zur Tischplatte zu wählen. Mit Hilfe eines Umlenkspiegels wird dann aus einem horizontalen Laserstrahl ein vertikaler Laserstrahl erzeugt, der senkrecht auf den Gitterkoppler auftrifft. Da bei der erfindungsgemässen Messeinrichtung immer nur geringe Winkeländerungen vorkommen, kann der Messtropfen während der gesamten Messzeit nicht abfliessen.

Vorteilhafterweise wird ein linear polarisierter Laser eingesetzt. Mit einem derartigen Laser kann durch Drehen des Laserrohrs die Lichtleistung, die in einen Mode eingekoppelt wird, variiert werden. Insbesondere kann erreicht werden, dass die Intensität des $T_{EO}$-Modes und diejenige des $T_{MO}$-Modes gleich gross werden.

Die Resonanzeinkopplungskurven werden vorteilhaft mit folgender Technik aufgenommen. An den beiden Enden des Wellenleiters wird je eine Photodiode $D_+$ bzw. $D_-$ montiert, welche die Intensität des in den Wellenleiter eingekoppelten Laserlichts messen. Die Fotodiode $D_\pm$ misst die Modenintensität $i_\pm$ des in ($\pm x$)-Richtung laufenden Modes Die detektierte Modenintensität in Abhängigkeit des Einfallswinkels $\alpha$ ist proportional zur Resonanzeinkopplungskurve $\eta_\pm(\alpha)$, die sich durch eine gewisse Resonanzbreite auszeichnet. Typische Werte für Resonanzbreiten liegen im Intervall von 4 - 6 Bogenminuten.

Der Einfallswinkel $\alpha$ kann wie folgt aus der Position $X_{MS}$ der Mikrometerschraube berechnet werden: Ist der Abstand zwischen $P_1$ und $P_2$ gleich R, so gilt:

$$\alpha = \arctan (X_{MS}/R)$$

Der exakte Resonanz-Einfallswinkel $\alpha_{1+}$ bzw. $\alpha_{1-}$ wird durch einen mathematischen Algorithmus aus der Resonanzeinkopplungskurve $\eta_\pm(\alpha)$ errechnet. Beispielsweise wird der Resonanz-Einfallswinkel $\alpha_{1\pm}$ als

3

integraler Schwerpunkt der Resonanzeinkopplungskurve $\eta_\pm(\alpha)$ definiert, d.h. es soll

$$\int_{-\infty}^{\alpha_{1\pm}} \eta_\pm(\alpha)\,d\alpha = \int_{\alpha_{1\pm}}^{+\infty} \eta_\pm(\alpha)\,d\alpha$$

gelten. Diese Gleichung bestimmt in eindeutiger Weise den Resonanz-Einfallswinkel $\alpha_{1\pm}$ .In Figur 3 ist eine Resonanzeinkopplungskurve graphisch dargestellt. Obige Definitionsgleichung bedeutet, dass die horizontal schraffierte Fläche und die vertikal schraffierte Fläche gleich gross sind.

Es ist vorteilhaft, bei obigem Algorithmus einen Untergrund zu berücksichtigen, d.h. obige Definitionsgleichung für den Resonanz-Einfallswinkel wie folgt zu ergänzen:

$$\int_{-\infty}^{\alpha_{1\pm}} \eta'_\pm(\alpha)\,d\alpha = \int_{\alpha_{1\pm}}^{+\infty} \eta'_\pm(\alpha)\,d\alpha$$

$$(\eta'_\pm > 0) \qquad\qquad (\eta'_\pm > 0)$$

wobei $\eta'_\pm = \eta_\pm - t\eta_{\pm max}$ mit t = 0.2 als typischem Wert. Das Maximum einer Resonanzeinkopplungskurve $\eta_\pm$ wird als $\eta_{\pm max}$ bezeichnet. Da die Resonanzeinkopplungskurven sehr kleine Resonanzbreiten aufweisen, kann obige Bedingung auch in $x_{MS}$-Koordinaten

$$\int_{-\infty}^{X_{1\pm}} \eta'_\pm(x_{ns})\,dx_{ns} = \int_{X_{1\pm}}^{+\infty} \eta'_\pm(x_{ns})\,dx_{ns}$$

$$(\eta'_\pm > 0) \qquad\qquad (\eta'_\pm > 0)$$

geschrieben werden, wobei dann die Resonanz-Einfallswinkel durch
$\alpha_{1\pm} \approx \arctan(X_{1\pm}/R)$
gegeben sind. Dieses Verfahren ist besonders dann interessant, wenn die Position des Messpunktes der Mikrometerschraube MS über einen vorzugsweise optischen Encoder abgelesen wird. Diese Näherung verursacht für die effektive Brechzahl einen vernachlässigbaren Fehler von $10^{-8}$ bis $10^{-9}$.

Die sehr präzise Bestimmung des Autokollimationswinkels bietet ferner die Möglichkeit, die effektive Brechzahl eines Modes fortlaufend quantitativ zu bestimmen, auch wenn der Wellenleiter zeitweise von der Drehtischhalterung demontiert wird.

**Ansprüche**

01 Verfahren zur Bestimmung des Autokollimationswinkels eines aus einer wellenleitenden Struktur und einem Beugungsgitter bestehenden Gitterkopplers bezüglich eines Lichtstrahls, dadurch gekennzeichnet, dass

a) zumindest ein geführter Mode in Vorwärts- als auch in Rückwärtsrichtung unter Verwendung der entsprechenden positiven bzw. negativen Beugungsordnung angeregt wird, indem ein Lichtstrahl unter dem jeweiligen Resonanzeinfallswinkel auf das Beugungsgitter gerichtet wird,

b) die beiden Resonanzeinfallswinkel bestimmt werden;

c) der Autokollimationswinkel als Mittelwert der beiden Resonanzeinfallswinkel bestimmt wird.

02 Verfahren nach Anspruch 1, dadurch gekennzeichnet, dass bei vorgegebener Beugungsordnung die Gitterperiode derart gewählt wird, dass der als Differenz von Resonanzeinfallswinkel und Auftokollimationswinkel definierte Einkopplungswinkel möglichst klein wird.

03 Verfahren nach Anspruch 1, dadurch gekennzeichnet, dass bei vorgegebener Gitterperiode die Beugungsordnung derart gewählt wird, dass der als Differenz von Resonanzeinfallswinkel und Auftokollimationswinkel definierte Einkopplungswinkel möglichst klein wird.

04 Verfahren nach wenigstens einem der Ansprüche 2 oder 3, dadurch gekennzeichnet, dass der Einkopplungswinkel kleiner als $15^\circ$, vorzugsweise aber kleiner als $9^\circ$ gewählt wird.

05 Verfahren nach einem der Ansprüche 1 bis 4, dadurch gekennzeichnet, dass ein Drehtisch (T) verwendet wird, der über einen verstellbaren Hebelarm (H) mittels einer Vorschubvorrichtung (MS) in Drehbewegung versetzbar ist.

06 Verfahren nach Anspruch 5, dadurch gekennzeichnet, dass der Resonanzeinfallswinkel mit Hilfe des integralen Schwerpunktes einer Resonanzeinkopplungskurve in der Koordinatenachse ($X_{MS}$) der Vorschubeinrichtung (MS) bestimmt wird.

07 Verfahren nach einem der Ansprüche 1 bis 6, dadurch gekennzeichnet, dass zur Eichung der Messanordnung

a) mit wenigstens zwei verschiedene Moden wenigstens zwei Mittelwerte der entsprechenden Resonanzeinfallswinkel bestimmt werden und

b) der Koordinatenursprung $X_{MS} = 0$ für die Position eines Messpunktes ($P_2$) der Vorschubvorrich-tung (MS) derart positioniert wird, dass die beiden Mittelwerte der entsprechenden Resonanzeinfallswinkel möglichst gleich werden, und somit der Hebelarm (H) senkrecht zur Längsachse der Vorschubeinrichtung (MS) steht.

08 Verfahren nach einem der Ansprüche 1 bis 7, dadurch gekennzeichnet, dass als Lichtquelle ein polarisierter Laser verwendet wird.

09 Anwendung des Verfahrens nach einem der Ansprüche 1 bis 8, dadurch gekennzeichnet, dass mit Hilfe des Autokollimationswinkels die effektive Brechzahl aus der Einkopplungsbedingung quantitativ bestimmt wird.

10 Anwendung des Verfahrens nach Anspruch 7 oder 8, dadurch gekennzeichnet, dass zwecks Eichung eines Drehtisches diejenige Stellung des Hebelarms (H), bei welcher dieser senkrecht zur Längsachse der Vorschubvorrichtung (MS) steht, mit Hilfe eines mindestens zwei Moden tragenden Gitterkopplers ermittelt wird.

FIG. 1

FIG. 2

FIG. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | SECOND EUROPEAN CONFERENCE ON INTEGRATED OPTICS, Florenz, 17.-18. Oktober 1983, IEE Nr. 227, Seiten 108-111; K. TIEFENTHALER et al.: "Embossing technique for fabricating IO components in hard inorganic waveguiding materials" * Seite 108, rechte Spalte, Zeilen 36-54; Seite 109, linke Spalte, Zeilen 2-8 * | 1,9 | G 02 B 6/34<br>G 02 B 6/10<br>G 01 M 11/02<br>G 01 N 21/41<br>G 01 B 11/26 |
| Y | Idem<br>--- | 5-8 | |
| O,Y | SENSORS AND ACTUATORS, Band 15, Dezember 1988, Seiten 285-295, Elsevier Sequoia, NL; PH.M. NELLEN et al.: "Integrated optical input grating couplers as biochemical sensors" * Figur 1b; Seite 286, Zeile 13 - Seite 288, Zeile 4 * | 5-8 | |
| A | Idem<br>--- | 10 | RECHERCHIERTE SACHGEBIETE (Int. Cl.4) |
| A | PATENT ABSTRACTS OF JAPAN, Band 6, Nr. 258 (P-163)[1136], 17. Dezember 1982; & JP-A-57 153 227 (HITACHI SEISAKUSHO K.K.) 21-09-1982<br>--- | 5 | G 02 B<br>G 01 M<br>G 01 N<br>G 01 J |
| A | INTEGRATED OPTICS, 1973, herausgegeben von D. Marcuse, Seiten 144-145, IEEE, New York, US; M.L. DAKSS et al.: "Grating coupler for efficient excitation of optical guided waves in thin films"<br>----- | | |

Der vorliegende Recherchenbericht wurde für alle Patentansprüche erstellt

| Recherchenort | Abschlußdatum der Recherche | Prüfer |
|---|---|---|
| DEN HAAG | 31-08-1989 | KLEIKAMP B.M.H.H. |

EPO FORM 1503 03.82 (P0403)